# EUROPEAN PATENT APPLICATION

(11) **EP 1 605 214 A2**
(43) Date of publication of application: **14.12.2005**
(21) Application number: 05005683.7
(22) Date of filing: 16.03.2005
(51) Int. Cl.: F25B 49/02, F24F 11/00

(54) **Apparatus and method for controlling air-conditioner**

(30) Priority: 21.05.2004 KR 2004036521
(71) Applicant: LG ELECTRONICS INC., Seoul (KR)
(72) Inventor: Hwang, Yoon-Jei, Seoul (KR); Lee, Won-Hee, Seodaemun-Gu Seoul (KR); Hyun, Seung-Youp, Guro-Gu Seoul (KR); Song, Chan-Ho, Dyuckyang-Gu,Gowang,Gyeonggi-Do (KR)
(74) Representative: Cohausz & Florack

(57) **Abstract**

An apparatus for controlling an air-conditioner for generating a first control signal for controlling an air-conditioner in a minimum operation mode or a second control signal for controlling the air-conditioner for controlling the air-conditioner in a maximum operation mode based on a room temperature and a desired temperature previously set by a user, and controlling an indoor fan and an outdoor fan and compressing capacity of compressors of the air-conditioner in multistage based on the first or second control signal and the outdoor temperature. By controlling compressing capacity of the air-conditioner, a rotation speed of an outdoor fan and an indoor fan in multistage based on an outdoor temperature and control signals for controlling a room temperature, a load coping capability can be enhanced.

## Description

### BACKGROUND OF THE INVENTION

### 1. Field of the Invention

The present invention relates to an air-conditioner and, more particularly, to an apparatus and method for controlling an air-conditioner.

### 2. Description of the Conventional Art

In general, an air-conditioner, especially, a unitary air-conditioner, which is employed in factories, offices, hotels or homes, is a sort of a central cooling and heating system which applies cold blast or hot blast to each room through a duct installed in a building.

The unitary air-conditioner independently supplies cold blast or hot blast to a zone (e.g., a room) required to be cooled or heated through a zone controller installed between ducts positioned in the building.

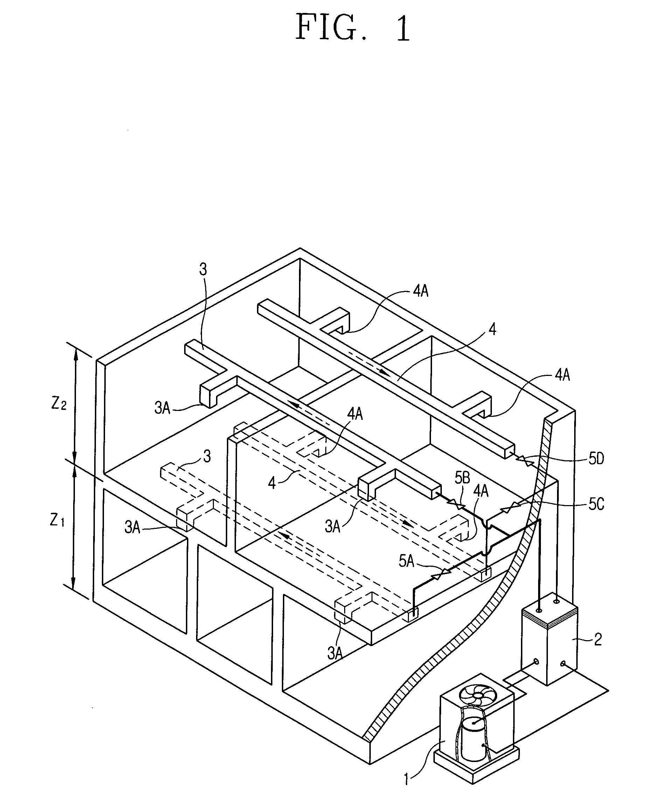

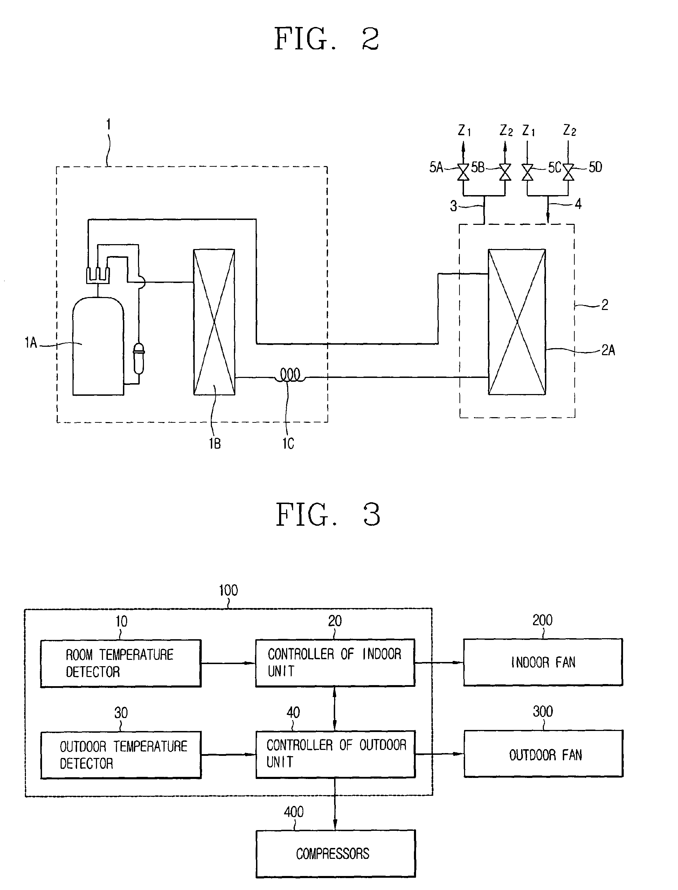

A conventional unitary air-conditioner will now be described with reference to Figures 1 and 2.

Figures 1 and 2 are schematic views showing the construction of a unitary air-conditioner.

With reference to Figure 1, the conventional unitary air-conditioner includes one outdoor unit 1 fixedly installed outside a building (i.e., a 2-story house (Z2)); an indoor unit 2 connected with the outdoor unit 1 through a refrigerant pipe, fixedly installed in a basement or a wall of the building and supplying cold blast or hot blast into the building; an outlet duct 4 connected to an inlet port and an outlet port, and separately installed in the wall of each floor of the building; and zone controllers 5A-5D installed between the inlet duct 3 and the outlet duct 4 and discriminating introduced air and exhausted air delivered through the inlet duct 3 and the outlet duct 4.

With reference to Figure 2, the outdoor unit 1 includes: a compressor 1A for compressing a refrigerant gas; a first heat exchanger 1 B connected with the compressor 1A through a refrigerant pipe, condensing refrigerant gas when the unitary air-conditioner is in a cooling mode, and absorbing latent heat when the unitary air-conditioner is in a heating mode; an expansion valve 1C for reducing a pressure of the refrigerant gas or expanding the refrigerant gas; and an outdoor fan (not shown) for supplying external air to the first heat exchanger 1 B to heighten heat exchange performance of the first heat exchanger 1 B.

The indoor unit 2 includes: a second heat exchanger 2A connected with the first heat exchanger 1 B by the expansion valve 1C; and an indoor fan (not shown) positioned at the second heat exchanger 2A and inducing cold blast or hot blast to the inlet duct 3.

The inlet duct 3 and the outlet duct 4 are connected to the inlet port and the outlet port of the indoor unit 2 and installed at a corresponding zone (e.g., at the first floor (Z1) or the second floor (Z2). The inlet duct 3 and the outlet duct 4 include a discharge passage 3A for supplying cold blast or hot blast to a corresponding zone and a suction opening 4A for sucking indoor air to circulate indoor air, respectively.

The zone controllers 5A-5D are valves installed at the inlet duct 3 and the outlet duct 4 installed at the zones Z1 and Z2 in order to supply cold blast or hot blast to the zones Z1 and Z2. Namely, the zone controllers 5A-5D are electrically connected with a controller (not shown) of the unitary air-conditioner. The controller detects a temperature or humidity of the corresponding zones, compares the detected temperature or humidity value with a pre-set value, and controls cold blast or hot blast according to the comparison result.

The conventional unitary air-conditioner controls the indoor unit 2 and the outdoor unit 1 according to a control signal outputted from a thermostat installed in the room. Namely, the conventional unitary air-conditioner controls the indoor unit 2 and the outdoor unit 1 in a minimum operation mode or a maximum operation mode based on a first control signal (Y1) for operating the air-conditioner in the minimum operation mode or the second control signal (Y2) for operating the air-conditioner in the maximum operation mode according to a room temperature. Herein, when the air-conditioner is in the cooling mode, if a current room temperature is lower than a room temperature which has been previously set by a user, the first control signal (Y1) rotates the indoor fan and the outdoor fan at a low speed and operates only one compressor. When the air-conditioner is in the cooling mode, if the current room temperature is higher than the pre-set room temperature, the second control signal (Y2) rotates the indoor fan and the outdoor fan at a high speed and operates two compressors simultaneously.

For example, the unitary air-conditioner controls to turn on/turn off only one of two compressors according to the first control signal or controls to turn on/turn off the two compressors simultaneously according to the second control signal. In this case, the indoor fan is rotated at a low speed according to the first control signal and rotated at a high speed according to the second control signal.

Thus, since the unitary air-conditioner controls the outdoor fan and compressors based only on the control signal detected by a temperature controller positioned in the room, a load coping capability deteriorates relatively.

A US Patent No. 6,519,957 issued on February 18, 2003 also discloses an air-conditioner.

### SUMMARY OF THE INVENTION

Therefore, an object of the present invention is to provide an apparatus and method for controlling an air-conditioner capable of enhancing load coping capability by controlling compressing capacity, a rotation speed of an outdoor fan and a rotation speed of an indoor fan of an air-conditioner in multistage based on an indoor temperature and control signals for controlling an outdoor temperature.

To achieve these and other advantages and in accordance with the purpose of the present invention, as embodied and broadly described herein, there is provided an apparatus for controlling an air-conditioner for generating a first control signal for controlling an air-conditioner in a minimum operation mode or a second control signal for controlling the air-conditioner for controlling the air-conditioner in a maximum operation mode based on a room temperature and a desired temperature previously set by a user, and controlling an indoor fan and an outdoor fan and compressing capacity of compressors of the air-conditioner in multistage based on the first or second control signal and the outdoor temperature.

To achieve the above object, there is also provided an apparatus for controlling a unitary air-conditioner including: a thermostat installed in a room, detecting a room temperature, generating a first control signal for operating the air-conditioner in a minimum operation mode or a second control signal for operating the air-conditioner in a maximum operation mode based on the detected room temperature and a desired temperature previously set by a user, and outputting the first or the second control signal; an outdoor temperature detector installed at an outdoor unit and detecting an outdoor temperature; and a controller, of an outdoor unit, for controlling a small compressing capacity compressor and/or high compressing capacity compressor of the air-conditioner based on the first or second control signal and the detected outdoor temperature, and controlling a rotation speed of an outdoor fan of the air-conditioner in multistage, wherein the thermostat rotates an indoor fan of the air-conditioner at the same rotation speed as the rotation speed of the outdoor fan.

To achieve the above object, there is also provided a method for controlling an air-conditioner including: detecting a room temperature; generating a first control signal for controlling an air-conditioner in a minimum operation mode or a second control signal for controlling the air-conditioner in a maximum operation mode based on the room temperature and a desired temperature previously set by a user; and controlling an indoor fan, an outdoor fan and compressing capacity of compressors based on the first or second control signal and the outdoor temperature.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figures 1 and 2 are a schematic view showing the construction of a unitary air-conditioner in accordance with a conventional art;
Figure 3 is a block diagram showing the construction of a unitary air-conditioner in accordance with a preferred embodiment of the present invention;
Figure 4 is a flow chart of a method for controlling the unitary air-conditioner in accordance with the preferred embodiment of the present invention; and
Figure 5 is a table showing an operation condition table for controlling a rotation speed of an outdoor fan and compressing capacity of compressors based on first and second control signals generated according to a room temperature and a pre-set reference temperature and an outdoor temperature.

### DETAILED DESCRIPTION OF THE PREFERRED EMBODIMENTS

An apparatus and method for controlling an air-conditioner capable of enhancing a load coping capability by generating a first control signal for controlling an air-conditioner in a minimum operation mode or a second control signal for controlling the air-conditioner for controlling the air-conditioner in a maximum operation mode based on a room temperature and a desired temperature previously set by a user, and controlling an indoor fan and an outdoor fan and compressing capacity of compressors of the air-conditioner in multistage based on the first or second control signal and the outdoor temperature, in accordance with a preferred embodiment of the present invention will now be described with reference to Figures 3 to 5.

Figure 3 is a block diagram showing the construction of a unitary air-conditioner in accordance with a preferred embodiment of the present invention.

As shown in Figure 3, a unitary air-conditioner in accordance with the present invention includes: a controlling unit 100 for generating a control signal for controlling the unitary air-conditioner; an indoor fan 200 rotated in multistage according to the control signal; an outdoor fan 300 rotated in multistage according to the control signal; and compressors 400 for controlling compressing capacity according to the control signal.

The controlling unit 100 of the unitary air-conditioner includes: a room temperature detector 10 installed in a room and detecting a room temperature; an outdoor temperature detector 30 installed in an outdoor unit and detecting an outdoor temperature; a controller 20 of an indoor unit for generating a first control signal Y1 for operating the air-conditioner in a minimum operation mode or a second control signal Y2 for operating the air-conditioner in a maximum operation mode based on the detected room temperature and a desired temperature previously set by a user, and outputting the first and second control signals Y1 and Y2; and a controller 40 of the outdoor unit for generating a third control signal for controlling compressing capacity of the compressors 400 and a rotation speed of the outdoor fan 300 in multistage based on the first or the second control signal Y1 or Y2 and the detected outdoor temperature and outputting the generated third control signal to the compressors 400, the outdoor fan 300 and the controller 20 of the indoor unit. Herein, the controller 20 of the indoor unit controls a rotation speed of the indoor fan 200 according to the third control signal.

Preferably, the first and second control signals Y1 and Y2 are generated by using a thermostat, instead of the room temperature detector 10 and the controller 20 of the indoor unit.

Preferably, the compressors 400 include a compressor with small compressing capacity and a compressor with high compressing capacity. Assuming that a total compressing capacity of the small compressing capacity compressor and the high compressing capacity compressor is 100%, it is preferred that the compressing capacity of the small compressing capacity compressor is set as 40% and the compressing capacity of the high compressing capacity compressor is set as 60%.

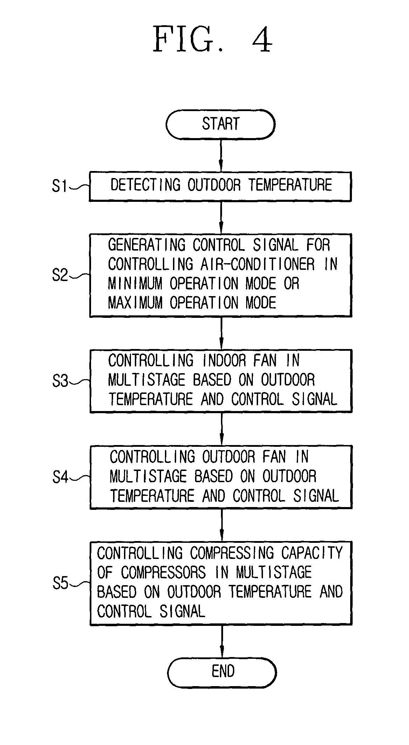

The operation of the apparatus for controlling the unitary air-conditioner in accordance with the present invention will now be described with reference to Figure 4.

Figure 4 is a flow chart of a method for controlling the unitary air-conditioner in accordance with the preferred embodiment of the present invention.

First, the room temperature detector 10 installed in a room detects a room temperature and applies the detected room temperature to the controller 20 of the indoor unit. At this time, the outdoor temperature detector 30 detects an outdoor temperature and applies the detected outdoor temperature information to the controller 40 of the outdoor unit (step S1).

The controller 20 of the indoor unit generates the first control signal Y1 for operating the air-conditioner in the minimum operation mode or the second control signal Y2 for operating the air-conditioner in the maximum operation mode based on the detected room temperature and the pre-set desired temperature, and applies the first or the second control signal Y1 or Y2 to the controller 40 of the outdoor unit (step S2).

The controller 40 of the outdoor unit generates a compressing capacity control signal for controlling compressing capacity of the compressors 400 in multistage and a speed control signal for controlling a rotation speed of the outdoor fan 300 and the indoor fan 200 in multistage based on the first or second control signal Y1 or Y2 and the outdoor temperature information. The controller 40 of the outdoor unit outputs the compressing capacity control signal to the compressors 400 and the speed control signal to the outdoor fan 300 and the controller 20 of the indoor unit (steps S3~S5).

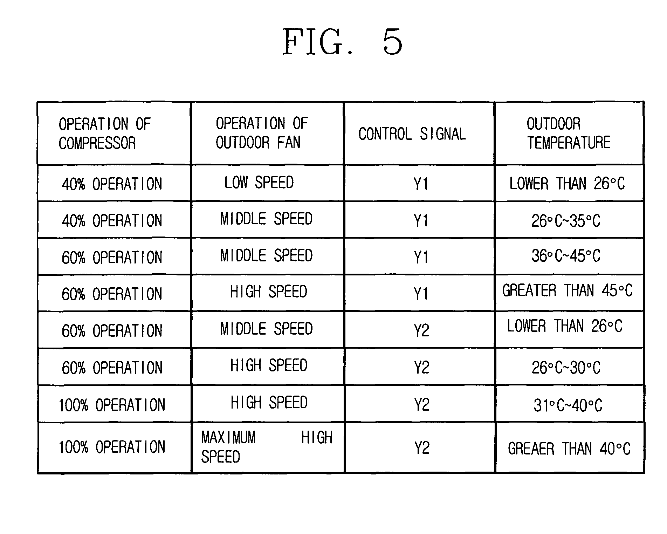

Operation conditions for controlling the compressing capacity of the compressors 400 and the rotation speed of the outdoor fan 300 and the indoor fan 200 based on the first or second control signal Y1 or Y2 and the outdoor temperature information will be described in detail with reference to Figure 5 as follows.

Figure 5 is a table showing an operation condition table for controlling a rotation speed of an outdoor fan and compressing capacity of compressors based on an outdoor temperature, first and second control signals generated according to a pre-set reference temperature and a room temperature.

First, when the first control signal Y1 and outdoor temperature information (i.e., 26°~35°) are received, the controller 40 of the outdoor unit turns on only the small compressing capacity compressor (having the compressing capacitor of 40%) and applies a voltage for rotating the outdoor fan 300 at a middle speed to the outdoor fan 300 simultaneously. When the voltage for rotating the outdoor fan 300 at the middle speed is applied to the outdoor fan 300, preferably, the controller 20 of the indoor unit applies the same voltage as the voltage for rotating the outdoor fan 300 at the middle speed to the indoor fan 200.

When the first control signal Y1 and outdoor temperature information (i.e., 36°~45°) are received, the controller 40 of the outdoor unit turns on only the high compressing capacitor compressor (having the 60% of compressing capacity) and, at the same time, applies a voltage for rotating the outdoor fan 300 in the middle speed to the outdoor fan 300. In this case, preferably, the controller 20 applies the same voltage as the voltage for rotating the outdoor fan 300 at the middle speed to the indoor fan 200.

When the first control signal Y1 and outdoor temperature information (higher than 45°) are received, the controller 40 of the outdoor unit turns on only the high compressing capacity compressor (having the 60% of compressing capacitor) and, at the same time, applies a voltage for rotating the outdoor fan 300 at a high speed to the outdoor fan 300. In this case, preferably, the controller 20 of the indoor unit applies the same voltage as the voltage for rotating the outdoor fan 300 at the high speed to the indoor fan 200.

When the second control signal Y2 and outdoor temperature information (lower than 26°) are received, the controller 40 of the outdoor unit turns on only the high compressing capacity compressor (having the 60% of compressing capacity) and at the same time applies the voltage for rotating the outdoor fan 300 at the middle speed to the outdoor fan 300. In this case, preferably, the controller 20 of the indoor unit applies the same voltage as the voltage for rotating the outdoor fan 300 at the middle speed to the indoor fan 200.

When the second control signal Y2 and outdoor temperature information (26°~30°) are received, the controller 40 of the outdoor unit turns on only the high compressing capacitor compressor (having 60% of compressing capacitor) and, at the same time, applies a voltage for rotating the outdoor fan 300 at a high speed to the outdoor fan 300. In this case, preferably, the controller 20 of the indoor unit applies the same voltage as the voltage for rotating the outdoor fan 300 at the high speed to the indoor fan 200.

When the second control signal Y2 and outdoor temperature information (31°~40°) are received, the controller 40 of the outdoor unit turns on the high compressing capacity compressor and the small compressing capacity compressor simultaneously, and at the same time, applies a voltage for rotating the outdoor fan 300 at the high speed to the outdoor fan 300. In this case, preferably, the controller 20 of the indoor unit applies the same voltage as the voltage for rotating the outdoor fan 300 at the high speed to the indoor fan 200.

When the second control signal Y2 and outdoor temperature information (higher than 40°) are received, the controller 40 of the outdoor unit turns on the high compressing capacity compressor and the small compressing capacitor compressor simultaneously, and at the same time, applies a voltage for rotating the outdoor fan 300 at a maximum high speed to the outdoor fan 300. In this case, preferably, the controller 20 of the indoor unit applies the same voltage as the voltage for rotating the outdoor fan 300 at the maximum high speed to the indoor fan 200.

When an outdoor temperature is 41 ° or higher and the small compressing capacity compressor and the high compressing capacitor compressor are both being turned on for a first predetermined time (i.e., 30∼40 minutes), the controller 40 of the outdoor unit turns on the high compressing capacitor compressor and the small compressing capacitor compressor for a second predetermined time (i.e., 10~20 minutes) alternately, in order to prevent damage of the compressor due to an overload.

The present invention has discovered through several times of trial and error and experimentation the fact that the load coping capability can be enhanced by controlling the compressing capacity, the outdoor fan and the indoor fan according to the operation conditions as shown in Figure 5.

As so far described, the apparatus and method for controlling the air-conditioner in accordance with the present invention has the following advantages.

That is, for example, by controlling the compressing capacity and the rotation speed of the outdoor fan and the indoor fan based on the first or second control signal Y1 or Y2 generated based on the room temperature and the desired temperature previously set by the user and the outdoor temperature in multistage, the load coping capability can be enhanced.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. An apparatus for controlling an air-conditioner for generating a first control signal for controlling an air-conditioner in a minimum operation mode or a second control signal for controlling the air-conditioner in a maximum operation mode based on a room temperature and a desired temperature previously set by a user, and controlling an indoor fan and an outdoor fan and compressing capacity of compressors of the air-conditioner in multistage based on the first or second control signal and an outdoor temperature.

2. The apparatus of claim 1, comprising:
a room temperature detector installed in a room and detecting the room temperature;
an outdoor temperature detector installed at an outdoor unit and detecting the outdoor temperature;
a controller of an indoor unit for generating the first control signal for operating the air-conditioner in the minimum operation mode or the second control signal for operating the air-conditioner in the maximum operation mode based on the detected room temperature and the desired temperature previously set by the user, and outputting the first and second control signals; and
a controller of an outdoor unit for generating a third control signal for controlling the compressing capacity of the compressors of the air-conditioner and a rotation speed of the outdoor fan in multistage based on the first and second control signals and the detected outdoor temperature, and outputting the third control signal to the compressors, the outdoor fan, and the controller of the indoor unit,
wherein the controller of the indoor unit controls the rotation speed of the indoor fan in multistage according to the third control signal.

3. The apparatus of claim 2, wherein the compressors includes a small compressing capacitor compressor and a high compressing capacity compressor.

4. The apparatus of claim 3, wherein when the controller of the outdoor unit receives the first control signal and the outdoor temperature information, it turns on only the small compressing capacity compressor and, at the same time, applies a voltage for rotating the outdoor fan at a low speed to the outdoor fan, and
when the voltage for rotating the outdoor fan at the low speed is applied to the outdoor fan, the controller of the indoor unit applies the same voltage as the voltage for rotating the outdoor fan at the low speed to the indoor fan,
wherein the outdoor temperature information is lower than 26°.

5. The apparatus of claim 3, wherein when the controller of the outdoor unit receives the first control signal and the outdoor temperature information, it turns on only the small compressing capacity compressor and, at the same time, applies a voltage for rotating the outdoor fan at a middle speed to the outdoor fan, and
when the voltage for rotating the outdoor fan at the middle speed is applied to the outdoor fan, the controller of the indoor unit applies the same voltage as the voltage for rotating the outdoor fan at the middle speed to the indoor fan,
wherein the outdoor temperature information is 26°~35°.

6. The apparatus of claim 3, wherein when the controller of the outdoor unit receives the first control signal and the outdoor temperature information, it turns on only the high compressing capacity compressor and, at the same time, applies a voltage for rotating the outdoor fan at a middle speed to the outdoor fan, and
when the voltage for rotating the outdoor fan at the middle speed is applied to the outdoor fan, the controller of the indoor unit applies the same voltage as the voltage for rotating the outdoor fan at the middle speed to the indoor fan,
wherein the outdoor temperature information is 36°~45°.

7. The apparatus of claim 3, wherein when the controller of the outdoor unit receives the first control signal and the outdoor temperature information, it turns on only the high compressing capacity compressor and, at the same time, applies a voltage for rotating the outdoor fan at a high speed to the outdoor fan, and
when the voltage for rotating the outdoor fan at the high speed is applied to the outdoor fan, the controller of the indoor unit applies the same voltage as the voltage for rotating the outdoor fan at the high speed to the indoor fan,
wherein the outdoor temperature information is greater than 45°.

8. The apparatus of claim 3, wherein when the controller of the outdoor unit receives the second control signal and the outdoor temperature information, it turns on only the high compressing capacity compressor and, at the same time, applies a voltage for rotating the outdoor fan at the middle speed to the outdoor fan, and
when the voltage for rotating the outdoor fan at the middle speed is applied to the outdoor fan, the controller of the indoor unit applies the same voltage as the voltage for rotating the outdoor fan at the middle speed to the indoor fan,
wherein the outdoor temperature information is smaller than 26°.

9. The apparatus of claim 3, wherein when the controller of the outdoor unit receives the second control signal and the outdoor temperature information, it turns on only the high compressing capacity compressor and, at the same time, applies a voltage for rotating the outdoor fan at the high speed to the outdoor fan, and
when the voltage for rotating the outdoor fan at the high speed is applied to the outdoor fan, the controller of the indoor unit applies the same voltage as the voltage for rotating the outdoor fan at the high speed to the indoor fan,
wherein the outdoor temperature information is 26°~30°.

10. The apparatus of claim 3, wherein when the controller of the outdoor unit receives the second control signal and the outdoor temperature information, it turns on both the high compressing capacity compressor and the small compressing capacitor compressor simultaneously and, at the same time, applies a voltage for rotating the outdoor fan at the high speed to the outdoor fan, and
when the voltage for rotating the outdoor fan at the high speed is applied to the outdoor fan, the controller of the indoor unit applies the same voltage as the voltage for rotating the outdoor fan at the high speed to the indoor fan,
wherein the outdoor temperature information is 31°~40°.

11. The apparatus of claim 3, wherein when the controller of the outdoor unit receives the second control signal and the outdoor temperature information, it turns on both the high compressing capacity compressor and the small compressing capacitor compressor simultaneously and, at the same time, applies a voltage for rotating the outdoor fan at a maximum high speed to the outdoor fan, and
when the voltage for rotating the outdoor fan at the maximum high speed is applied to the outdoor fan, the controller of the indoor unit applies the same voltage as the voltage for rotating the outdoor fan at the maximum high speed to the indoor fan,
wherein the outdoor temperature information is greater than 40°.

12. The apparatus of claim 3, wherein in order to prevent damage of the compressors owing to an overload, when both the small compressing capacity compressor and the high compressing capacitor compressor are being turned on simultaneously for a first predetermined time, the controller of the outdoor unit turns on the high compressing capacity compressor and the small compressing capacitor compressor alternately for a second predetermined time.

13. An apparatus for controlling a unitary air-conditioner comprising:
a thermostat installed in a room, detecting a room temperature, generating a first control signal for operating the air-conditioner in a minimum operation mode or a second control signal for operating the air-conditioner in a maximum operation mode based on the detected room temperature and a desired temperature previously set by a user, and outputting the first or the second control signal;
an outdoor temperature detector installed at an outdoor unit and detecting an outdoor temperature; and
a controller, of an outdoor unit, for controlling a small compressing capacity compressor and/or high compressing capacity compressor of the air-conditioner based on the first or second control signal and the detected outdoor temperature, and controlling a rotation speed of an outdoor fan of the air-conditioner in multistage,
wherein the thermostat rotates an indoor fan of the air-conditioner at the same rotation speed as the rotation speed of the outdoor fan.

14. A method for controlling an air-conditioner comprising:
detecting a room temperature;
generating a first control signal for controlling an air-conditioner in a minimum operation mode or a second control signal for controlling the air-conditioner in a maximum operation mode based on the room temperature and a desired temperature previously set by a user; and
controlling an indoor fan, an outdoor fan and compressing capacity of compressors based on the first or second control signal and the outdoor temperature.
